# EUROPEAN PATENT APPLICATION

(11) **EP 4 498 185 A1**
(43) Date of publication of application: **29.01.2025**
(21) Application number: 23796702.1
(22) Date of filing: 20.04.2023
(51) Int. Cl.: G05B 13/04, G05B 19/418

(54) **PREDICTION CONTROL APPARATUS AND OPERATING METHOD THEREOF**

(30) Priority: 27.04.2022 KR 20220052424
(71) Applicant: LG Energy Solution, Ltd., Seoul 07335 (KR)
(72) Inventor: MIN, Ji Hong, Daejeon 34122 (KR); CHOI, Chang Lak, Daejeon 34122 (KR); SUH, Young Dae, Daejeon 34122 (KR); LEE, Sung Jin, Daejeon 34122 (KR)
(74) Representative: Hoffmann Eitle
(86) International application number: PCT/KR2023/005370
(87) International publication number: WO 2023/211055

(57) **Abstract**

A prediction control device according to an embodiment disclosed herein may include a data acquisition unit for acquiring data related to a base material onto which slurry is loaded by using a coating die; and a processor for analyzing slurry loading characteristics on the basis of the data, deriving a candidate control value including slurry temperature on the basis of the slurry loading characteristics, predicting the quality of the candidate control value by using a prediction model, and deriving an optimal control value on the basis of the quality.

## Description

### TECHNICAL FIELD

### CROSS-REFERENCE TO RELATED APPLICATION

The present application claims the benefit of the priority of Korean Patent Application No. 10-2022-0052424, filed on April 27, 2022, which is hereby incorporated by reference in its entirety.

### TECHNICAL FIELD

Embodiments disclosed herein relates to a prediction control device and a method of operating the same.

### BACKGROUND ART

Recently, research and development on a secondary battery have been actively conducted. Here, the secondary battery is a battery capable of charging and discharging, and includes all of conventional Ni/Cd batteries and Ni/MH batteries, and recent lithium ion batteries. Among secondary batteries, a lithium ion battery has an advantage of much higher energy density than conventional Ni/Cd batteries and Ni/MH batteries. In addition, since it is possible to manufacture lithium ion batteries in a small size and light weight, the lithium ion batteries are used as a power source for mobile devices. Recently, the applicable fields of lithium ion batteries has been expanded to a power source for electric vehicles, and thus lithium ion batteries draw attention as a next-generation energy storage medium.

In such lithium ion batteries, in order for an electrode assembly to have the maximum charging capacity, slurry should be formed with a uniform thickness on the opposite surface of an electrode. Therefore, making the coating thickness uniform in order to achieve a high-quality, high-efficiency product has recently emerged as an important technical issue.

### DISCLOSURE OF THE INVENTION

### TECHNICAL PROBLEM

By automating the correction work in an electrode coating process, it is necessary to secure the uniformity of a loading amount regardless of an operator's skill level.

In an electrode coating process, it is necessary to automate slurry temperature control in order to secure the uniformity of a loading amount.

Since slurry temperature control may affect quality elements (for example: coating width, mismatch, etc.) other than the uniformity of a loading amount, it is necessary to automate a correction work by considering several quality elements together.

The technical problems of the embodiments disclosed herein are not limited to the above-mentioned technical problems, and other technical problems not mentioned will be clearly understood by those skilled in the art from the description below.

### TECHNICAL SOLUTION

A prediction control device according to an embodiment disclosed herein may include: a data acquisition unit for acquiring data related to a base material onto which slurry is loaded by using a coating die; and a processor for analyzing slurry loading characteristics on the basis of the data, deriving a candidate control value including slurry temperature in response to an analysis result of the slurry loading characteristics, predicting the quality of the candidate control value by using a prediction model, and deriving an optimal control value on the basis of the quality.

According to an embodiment, the prediction model may be modeled by learning a correlation between the slurry temperature and the slurry loading characteristics.

According to an embodiment, the data may include slurry loading amount data of the base material, and the processor may analyze the uniformity of a slurry loading amount on the basis of the slurry loading amount data.

According to an embodiment, the slurry loading amount data may include center loading amount data and left/right coating portion loading amount data.

According to an embodiment, the processor may adjust the slurry temperature by using the optimal control value.

According to an embodiment, the data acquisition unit may acquire second data related to the base material after the processor adjusts the slurry temperature, and the processor may determine, on the basis of the second data, whether a mismatch has occurred, derive a second candidate control value including a slurry pump RPM or die spacing in response to the occurrence of the mismatch, predict second quality of the second candidate control value by using a second prediction model, and derive a second optimal control value on the basis of the second quality.

According to an embodiment, the second data may include image data acquired by converting the width of a coating portion of the base material and the width of a non-coating portion of the base material into images, and the processor may determine, on the basis of the image data, whether the mismatch has occurred.

According to an embodiment, the processor may adjust the slurry pump RPM or the die spacing by using the second optimal control value.

A method of operating a prediction control device according to an embodiment disclosed herein may include: acquiring data related to a base material onto which slurry is loaded by using a coating die; analyzing slurry loading characteristics on the basis of the data; deriving a candidate control value including a slurry temperature in response to an analysis result of the slurry loading characteristics; and predicting the quality of the candidate control value by using a prediction model, and deriving an optimal control value on the basis of the quality.

According to an embodiment, the prediction model may be modeled by learning a correlation between the slurry temperature and the slurry loading characteristics.

According to an embodiment, the data may include slurry loading amount data of the base material, and the method may further include analyzing the uniformity of a slurry loading amount on the basis of the slurry loading amount data.

According to an embodiment, the slurry loading amount data may include center loading amount data and left/right coating portion loading amount data.

According to an embodiment, the method may further include adjusting the slurry temperature by using the optimal control value.

According to an embodiment, the method may further include: acquiring second data related to the base material after adjusting the slurry temperature; determining, on the basis of, whether a mismatch has occurred; deriving a second candidate control value including a slurry pump RPM or die spacing in response to the occurrence of the mismatch; predicting second quality of the second candidate control value by using a second prediction model; and deriving a second optimal control value on the basis of the second quality.

According to an embodiment, the second data may include image data acquired by converting the width of a coating portion of the base material and the width of a non-coating portion of the base material into images, and the method may further include determining, on the basis of the image data, whether the mismatch has occurred.

According to an embodiment, the method may further include adjusting the slurry pump RPM or the die spacing by using the second optimal control value.

### ADVANTAGEOUS EFFECTS

A prediction control device disclosed herein can achieve uniform coating quality regardless of an operator's skill level by automating a real-time correction work in a coating process.

A prediction control device disclosed herein can perform the correction work on the temperature of slurry as well as die spacing and/or slurry pump RPM.

The effects of a prediction control device disclosed herein are not limited to the effects mentioned above, and other effects not mentioned will be clearly understood by those skilled in the art according to the present disclosure.

### BRIEF DESCRIPTION OF THE DRAWINGS

FIG. 1A is a view showing a prediction control system according to an embodiment disclosed herein.
FIG. 1B is a view illustrating a prediction model according to an embodiment disclosed herein.
FIG. 2 is a block diagram showing a prediction control device according to an embodiment disclosed herein.
FIG. 3 is a view for explaining slurry loading characteristics referred to in various embodiments disclosed herein.
FIG. 4 is a view showing control factors and major quality elements referred to in various embodiments disclosed herein.
FIG. 5 is a view showing candidate control values derived by a prediction control device according to an embodiment disclosed herein.
FIG. 6 is a view for explaining an operation of deriving an optimal control value from candidate control values by a prediction control device according to an embodiment disclosed herein.
FIG. 7 is a view for explaining a method of determining whether a mismatch has occurred according to an embodiment disclosed herein.
FIG. 8 is a view showing a second candidate control value derived by a prediction control device according to an embodiment disclosed herein.
FIG. 9 is a view for explaining an operation of deriving a second optimal control value from second candidate control values by a prediction control device according to an embodiment disclosed herein.
FIGS. 10 and 11 are flowcharts showing a method of operating a prediction control device according to an embodiment disclosed herein.

In relation to the description of the drawings, the same or similar reference numerals may be used for the same or similar components.

### MODE FOR CARRYING OUT THE INVENTION

Hereinafter, various embodiments of the present invention will be described with reference to the accompanying drawings. However, it should be understood that this is not intended to limit the present invention to specific embodiments, and includes various modifications, equivalents, and/or alternatives of the embodiments of the present invention.

Various embodiments of this document and terms used herein are not intended to limit the technical features described herein to specific embodiments, but should be understood to include various modifications, equivalents, or substitutes of the embodiments. In relation to the description of the drawings, like reference numbers may be used for like or related components. The singular form of a noun corresponding to an item may include one item or a plurality of items, unless the relevant context clearly indicates otherwise.

In this document, each of the phrases such as "A or B", "at least one of A and B", "at least one of A or B", "A, B or C", "at least one of A, B and C", and "at least one of A, B, or C" may include any one of the items listed together in that phrase, or all possible combinations thereof. The terms such as "1^{st}", "2^{nd}", "first", "second", "A", "B", "(a)" or " (b)" may be used to simply distinguish the corresponding component from other corresponding components and do not limit the corresponding component in other respects (for example: importance or order), unless specifically stated to the contrary.

In this document, when it is indicated that one (for example: first) component is "connected", coupled", or "linked" to another (for example: second) component, with or without the terms "functionally" or "communicatively", it means that the component can be connected to the other component directly (for example: by wire), wirelessly, or via a third component.

According to an embodiment, a method according to various embodiments disclosed herein may be provided while being included in a computer program product. Computer program products may be traded between sellers and buyers as commodities. A computer program product may be distributed in the form of a machine-readable storage medium (for example: compact disc read only memory (CD-ROM)), or distributed online (for example: downloaded or uploaded) via an application store or directly between two user devices. In the case of online distribution, at least part of a computer program product may be temporarily stored or temporarily created in a storage medium readable by a device such as a manufacturer's server, an application store server, or a relay server's memory.

According to various embodiments, each component (for example: module or program) of the above-described components may include a single object or a plurality of objects, and some of the plurality of objects may be separately disposed in other components. According to various embodiments, one or more components or operations among the aforementioned corresponding components may be omitted, or one or more other components or operations may be added. Alternatively or additionally, multiple components (for example: modules or programs) may be integrated into a single component. In this case, the integrated component may perform one or more functions of each of the plurality of components identically or similarly to those performed by a corresponding component of the plurality of components prior to the integration. According to various embodiments, operations performed by a module, program, or other component are executed sequentially, in parallel, iteratively, or heuristically, one or more of the operations may be executed in a different order, or omitted, or one or more other operations may be added.

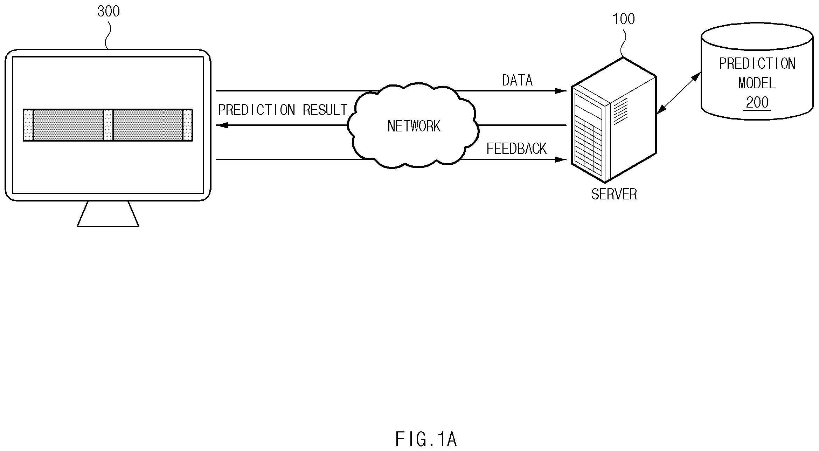

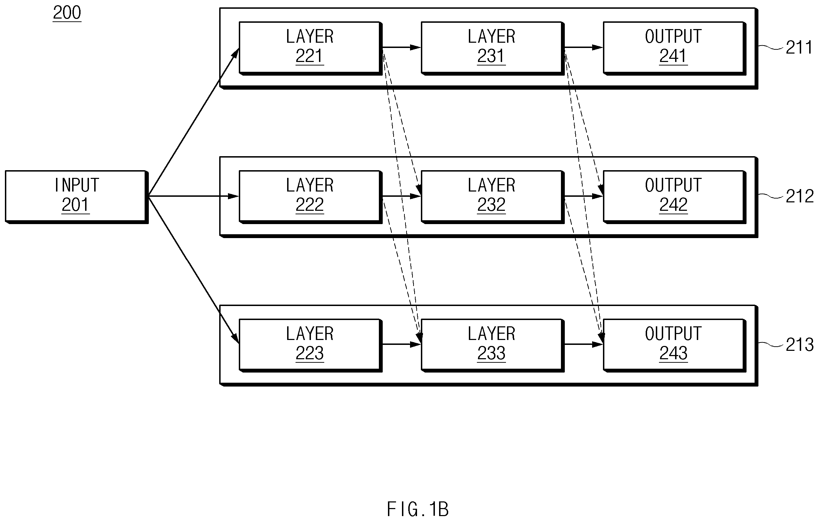

FIG. 1A is a view showing a prediction control system according to an embodiment disclosed herein. FIG. 1B is a view illustrating a prediction model according to an embodiment disclosed herein.

Referring to FIG. 1A, the prediction control system may include a prediction control device 100, a prediction model 200, and a user terminal 300. However, this is an example for achieving the purpose of the present invention, and some components may be added or deleted as necessary. In addition, each component of the prediction control system shown in FIG. 1A represents functional elements which are functionally distinguished from each other, and a plurality of components may be implemented in a mutually integrated form in an actual physical environment.

The prediction control device 100 is a computing device that provides machine learning-based prediction control to multiple users. According to an embodiment, the computing device may include a notebook, a desktop, a laptop, a high-performance server computing device, and the like. However, without being limited thereto, the computing device may include all types of devices equipped with a computing function and a communication function.

Prediction control may indicate a prediction control service for automatic correction of an electrode coating process which is provided by the prediction control device 100 on the basis of a machine learning model. According to an embodiment, the prediction control may include a prediction control service for automatic correction for mismatch and/or according to the slurry loading characteristics of the electrode coating process. According to an embodiment, the slurry loading characteristics may include slurry loading amount uniformity. Slurry may indicate a mixture of solid and liquid or a composition in which fine solid powder particles are suspended in a liquid solvent. For example, slurry may indicate a composition for forming an electrode. Mismatch may mean that the width and/or loading amount of slurry sprayed onto the opposite surface of an electrode is not uniform.

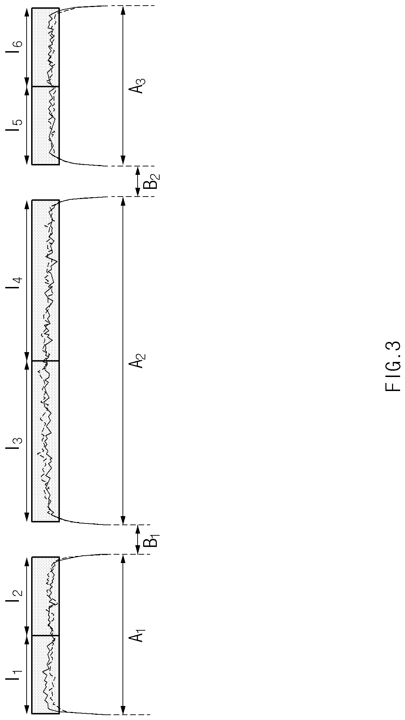

The prediction control device 100 may receive data from a user terminal 300. The data may include slurry loading amount data related to the loading amount of slurry applied to a base material. The data may include preprocessed slurry loading amount data. The slurry loading amount data may include center loading amount data and left/right coating portion loading amount data. The center loading amount data and left/right coating portion loading amount data are described in detail in FIG. 3.

The prediction control device 100 may analyze the slurry loading characteristics on the basis of data received from the user terminal 300. According to an embodiment, the slurry loading characteristics may include slurry loading amount uniformity.

The prediction control device 100 may derive an optimal control value from among a plurality of candidate control values for correcting slurry temperature in response to an analysis result of the slurry loading characteristics. In this case, the candidate control values may include slurry temperature. The prediction control device 100 may predict the quality of a plurality of candidate control values by using the prediction model 200. According to an embodiment, the prediction model 200 may be modeled by learning a correlation between slurry temperature and slurry loading characteristics. The prediction control device 100 may predict the quality of a plurality of candidate control values by using the prediction model 200 and derive an optimal control value on the basis of the predicted quality.

According to an embodiment, the prediction control device 100 may adjust slurry temperature by using the derived optimal control value.

According to an embodiment disclosed herein, when the prediction control device 100 adjusts slurry temperature, the prediction control device 100 may receive second data from the user terminal 300. In this case, the second data may indicate data related to a base material after the slurry temperature is adjusted. According to an embodiment, the second data may include data pertaining to the width of the coating portion and/or the width of the non-coating portion of the base material. According to an embodiment, data pertaining to the width of the coating portion and/or the width of the non-coating portion of the base material may correspond to image data converted into an image.

According to an embodiment, the prediction control device 100 may determine whether a mismatch has occurred on the basis of the second data. When a mismatch occurs, the prediction control device 100 may derive a second optimal control value from among a plurality of second candidate control values for correcting mismatch. In this case, the second candidate control values may include slurry pump RPM or die spacing. The prediction control device 100 may predict the second quality of the plurality of second candidate control values by using a second prediction model. In this case, according to an embodiment, the prediction model 200 may include the second prediction model. The prediction control device 100 may predict the second quality of the plurality of second candidate control values by using the second prediction model and derive the second optimal control value on the basis of the predicted second quality.

According to an embodiment, the prediction control device 100 may adjust the slurry pump RPM or the die spacing by using the derived second optimal control value.

The prediction model 200 may be a machine learning model that calculates a prediction control value for input data and provides an optimal control value. According to an embodiment, the prediction model 200 may include a second prediction model. According to an embodiment, the prediction model 200 may be constructed through a traditional machine learning technique or a deep learning technique. For example, the prediction model 200 may be an artificial intelligence model on the basis of a learning method (for example: transfer learning) for transferring previously learned knowledge. For example, the prediction model 200 may include an artificial intelligence model (for example: progressive neural network (PNN)) for transferring learning contents between tasks. Here, the tasks may indicate the task or goal of each of sequences included in an artificial intelligence model. For example, the tasks of the prediction model 200 may be to calculate a prediction control value (or optimal control value) for input data and to output a result of the calculation. Hereinafter, an operation of the prediction model 200 which is configured with a PNN will be described with reference to FIG. 1B. However, the prediction model 200 is not limited to the presented examples. For example, the prediction model 200 may include an artificial intelligence model based on fine tuning.

In an embodiment, the prediction model 200 may include a plurality of networks 211, 212, and 213. In an embodiment, the prediction model 200 may have a structure in which the networks 211, 212, and 213 are connected to each other. Here, the networks 211, 212, and 213 may each be an artificial intelligence network for generating a result according to a designated task.

In an embodiment, a new network may be added to the prediction model 200. For example, in a situation where only the network 211 exists in the prediction model 200, the network 212 may be newly added. In addition, for example, in a situation where the networks 211 and 212 exist in the prediction model 200, the network 213 may be newly added.

In an embodiment, when a new network is added to the prediction model 200, training of the existing network may be interrupted. Here, interruption of training may mean that layers included in the existing network and output weights are not changed.

In an embodiment, when a new network is added to the prediction model 200, the new network may be trained. Here, the training may be based on a backpropagation algorithm.

In an embodiment, the networks 211, 212, and 213 included in the prediction model 200 may be connected to each other in such a way that an intermediate calculation result of an existing network is input to a new network. For example, when the first network 211, the second network 212, and the third network 213 are added in this order to the prediction model 200, an intermediate calculation result of the first network 211 may be input to the second network 212 and the third network 213. In addition, an intermediate calculation result of the second network 212 may be input to the third network 213.

In an embodiment, some of the networks 211, 212, and 213 included in the prediction model 200 may be merged. For example, the first network 211 and the second network 212 may be merged into one network. In an embodiment, by merging the first network 211 and the second network 212, the sum of the output of a first layer 221 of the first network 211 and the output of a first layer 222 of the second network 212 may be the same as the output of a first layer of a network after merging. In addition, due to merging of the first network 211 and the second network 212, the sum of the output of a second layer 221 of the first network 211 and the output of a second layer 222 of the second network 212 may be the same as the output of a second layer of a network after merging. Similarly, due to merging of the first network 211 and the second network 212, the sum of the output of an n^{th} layer of the first network 211 and the output of an n^{th} layer of the second network 212 may be the same as the output of an n^{th} layer of a network after merging.

In an embodiment, merging may occur when the number of some of the networks 211, 212, and 213 included in the prediction model 200 exceeds a reference value.

In an embodiment, an input 201 of the networks 211, 212, and 213 may be a second candidate control value (for example: die spacing and slurry pump RPM). In an embodiment, outputs 241, 242, and 243 of the networks 211, 212, and 213 may include a loading pattern (for example: slurry loading amount uniformity and/or mismatch) or a coating width.

In an embodiment, the first network 211 may be trained to have a positive correlation between the input 201 (that is, second candidate control value) and the output 241 (that is, loading pattern or coating width). For example, the first network 211 may be trained so that the value of an output parameter (for example: coating width) increases or decreases as a left spacing and/or a right spacing increases or decreases according to a step size (for example: ±1 [µm]). In an embodiment, training data of the first network 211 may be randomly generated data.

In an embodiment, the second network 212 may be trained based on actually acquired data (that is, data indicating a correlation between the second candidate control value and the loading pattern or coating width). In an embodiment, the second network 212 may generate an output 242 on the basis of the input 201 (that is, second candidate control value) and the outputs of the layers 221 and 231 of the first network 211. In an embodiment, the second network 212 may be trained so that a difference between the output 242 of the second network 212 and actual data associated with the input 201 (that is, loading pattern or coating width) is minimal. Here, the training of the second network 212 may be based on a backpropagation algorithm. In an embodiment, the first network 211 may not be trained at the time when the second network 212 is trained. In an embodiment, parameters of the first network 211 may be fixed at the time when the second network 212 is trained.

In an embodiment, the third network 213 may be trained based on data acquired after training data of the second network 212 (that is, data representing a correlation between the second candidate control value and the loading pattern or coating width). In an embodiment, the third network 213 may generate the output 243 on the basis of the input 201 (that is, the second candidate control value), the outputs of layers 221 and 231 of the first network 211, and the outputs of layers 222 and 232 of the second network 212. In an embodiment, the third network 213 may be trained so that a difference between the output 243 of the third network 213 and actual data associated with the input 201 (that is, loading pattern or coating width) is minimal. Here, the training of the third network 213 may be based on a backpropagation algorithm. In an embodiment, the first network 211 and the second network 212 may not be trained at the time when the third network 213 is trained. In an embodiment, parameters of the first network 211 and the second network 212 may be fixed at the time when the third network 213 is trained.

In an embodiment, when a new network is added after training of the third network 213, training data of the new network may be data acquired after training data of the third network 213. In addition, at the time of training a new network, parameters of previously added networks 211, 212, and 213 may be fixed. Finally, when a new network is added after training of the third network 213, some of previously added networks 211, 212, and 213 may be merged in the order in which the networks were added first.

In an embodiment, an optimal control value provided by the prediction model 200 may be the output 243 of a network added last (that is, the third network 213) among the outputs 241, 242, and 243 of the networks 211, 212, and 213.

According to an embodiment, the prediction control device 100 may update the prediction model 200 by using a feedback learning model. According to an embodiment disclosed herein, the prediction model 200 may include a second prediction model. The feedback learning model may indicate a machine learning model that has been trained with user feedback on satisfaction level of prediction results. According to this embodiment, since the prediction model 200 is updated based on user satisfaction level, user satisfaction level of prediction control may be improved.

According to an embodiment, the prediction model 200 may be constructed in a computing device physically independent of the prediction control device 100, or constructed in the prediction control device 100. Hereinafter, a description will be made on the assumption that the prediction model 200 is constructed in the prediction control device 100.

The user terminal 300 may indicate a user terminal that transmits data by which prediction control will be provided. According to an embodiment, the user terminal 300 may correspond to a vision system. Here, the vision system may indicate a system that generates data related to a base material onto which slurry is applied through a coating die. Here, the base material may indicate a rechargeable battery including an electrode. For example, the base material may include a secondary battery.

According to an embodiment, the user terminal 300 may generate loading profile data about slurry. The loading profile data may include slurry loading amount data. According to an embodiment, the slurry loading amount data may be preprocessed. According to an embodiment, the user terminal 300 may generate image data acquired by converting the width of the coating portion and/or the width of the non-coating portion of the base material into images. The prediction control device 100 may acquire data through the user terminal 300. The prediction control device 100 may provide a prediction result based on data acquired through the user terminal 300. In this case, the prediction control device 100 may provide a user interface for inducing user feedback, and a user may provide user feedback information on the satisfaction level of prediction results through the user interface. The prediction control device 100 may gradually train a feedback learning model by using the user feedback information.

Components of the prediction control system may communicate over a network. According to an embodiment, the network may be implemented by all types of wired networks or wireless networks such as a Local Area Network (LAN), a Wide Area Network (WAN), a mobile radio communication network, and the Wireless Broadband Internet (Wibro).

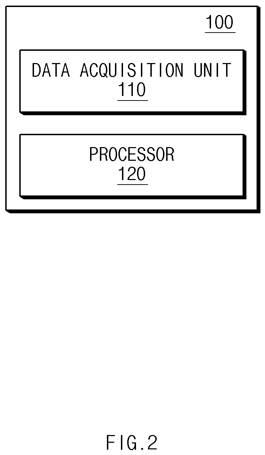

Hereinafter, the configuration and operation of the prediction control device 100 will be described with reference to FIGS. 2 to 11.

FIG. 2 is a block diagram showing a prediction control device according to an embodiment disclosed herein.

Referring to FIG. 2, the prediction control device 100 may include a data acquisition unit 110 and a processor 120. The prediction control device 100 in FIG. 2 may have substantially the same configuration as the prediction control device 100 in FIG. 1.

The data acquisition unit 110 may acquire data related to an object to be prediction-controlled from a user terminal 300.

According to an embodiment, an object to be prediction-controlled may include a base material onto which slurry is loaded using a coating die. The data acquisition unit 110 may acquire data related to the base material onto which slurry is loaded using a coating die from the user terminal 300. According to an embodiment, the data may include slurry loading amount data of the base material. According to an embodiment, the slurry loading amount data may correspond to data preprocessed by the user terminal 300. According to an embodiment, the slurry loading amount data may include center loading amount data and/or left/right coating portion loading amount data.

According to an embodiment, an object to be prediction-controlled may include a base material after the processor 120 adjusts slurry temperature. The data acquisition unit 110 may acquire, from the user terminal 300, second data related to the base material after the processor 120 adjusts slurry temperature, as will be described later. According to an embodiment, the second data may include image data acquired by converting the width of the coating portion and/or the width of the non-coating portion of the base material into images. According to an embodiment disclosed herein, the present specification is prepared on the assumption that a target object to be prediction-controlled is a base material onto which slurry is loaded using a coating die, but is not limited thereto.

The processor 120 may analyze slurry loading characteristics on the basis of data acquired by the data acquisition unit 110. According to an embodiment, the slurry loading characteristics may include slurry loading amount uniformity. For example, when the data acquisition unit 110 acquires slurry loading amount data, the processor 120 may analyze slurry loading amount uniformity on the basis of the slurry loading amount data.

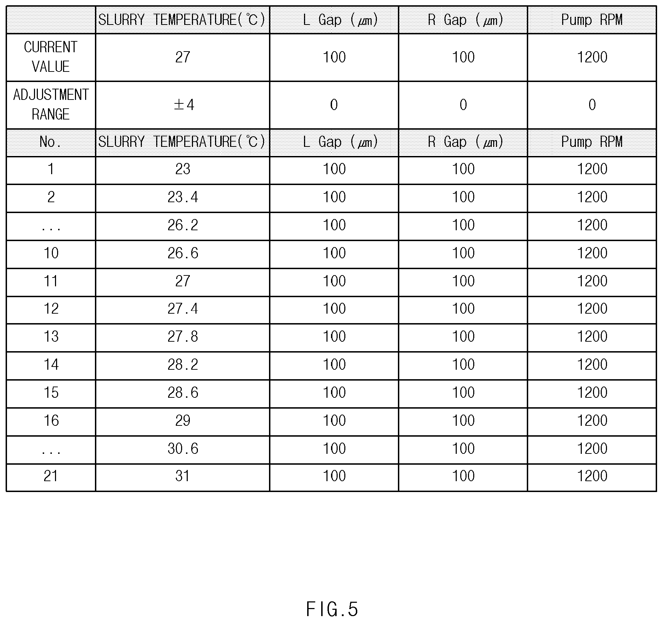

The processor 120 may derive a candidate control value in response to an analysis result of the slurry loading characteristics. According to an embodiment, the candidate control value may include slurry temperature. For example, the processor 120 may derive, on the basis of slurry loading characteristics, a candidate control value including slurry temperature. This will be described in detail with reference to FIG. 5.

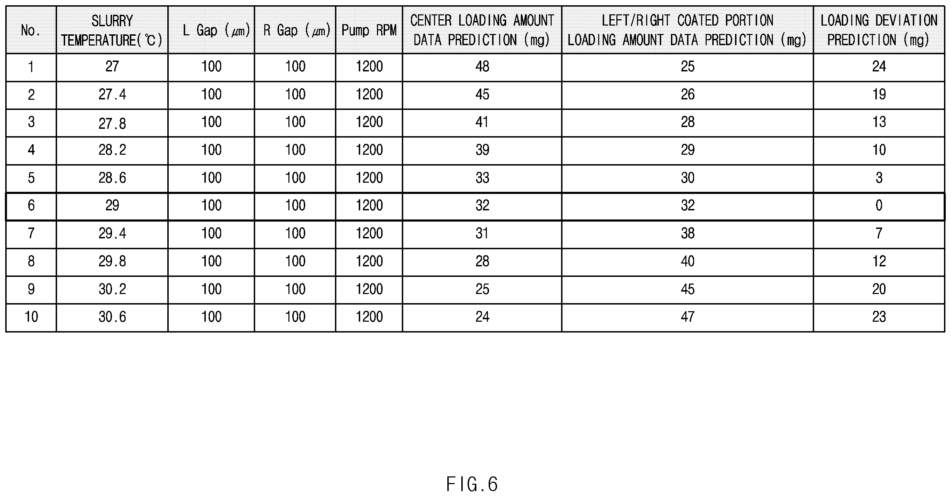

The processor 120 may predict the quality of a candidate control value by using a prediction model. According to an embodiment, the prediction model may be modeled by learning a correlation between slurry temperature and slurry loading characteristics. The processor 120 may derive an optimal control value on the basis of the predicted quality. Details of the processor 120 deriving the optimal control value will be described with reference to FIG. 6.

When the data acquisition unit acquires second data according to an embodiment disclosed herein, the processor 120 may determine whether a mismatch has occurred, on the basis of the second data. According to an embodiment, the processor 120 may calculate whether a mismatch has occurred, by using the widths of tops and/or backs of two different opposite surfaces of a base material. Among the upper or lower surfaces of an electrode-coated base material, a top may indicate a surface having a relatively long coating length, and a back may indicate a surface having a relatively short coating length. For example, the processor 120 may calculate a mismatch value by using the width of the coating portion and/or the width of the non-coating portion of the top and/or back of the base material. The coating portion may indicate an area where the base material is loaded and coated with slurry, and the non-coating portion may indicate an area where the base material is not loaded with the slurry.

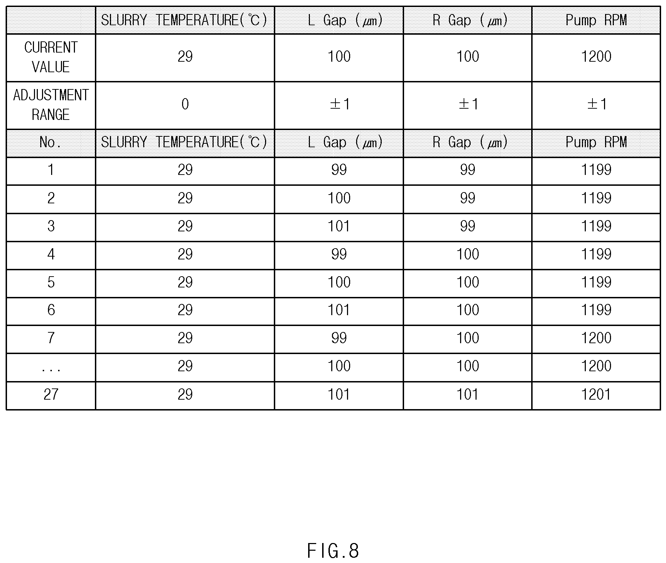

According to an embodiment, the processor 120 may derive a second candidate control value in response to the occurrence of a mismatch. According to an embodiment, the second candidate control value may include slurry pump RPM or die spacing. For example, the processor 120 may derive a second candidate control value including slurry pump RPM or die spacing in response to the occurrence of a mismatch. This will be described in detail with reference to FIG. 8.

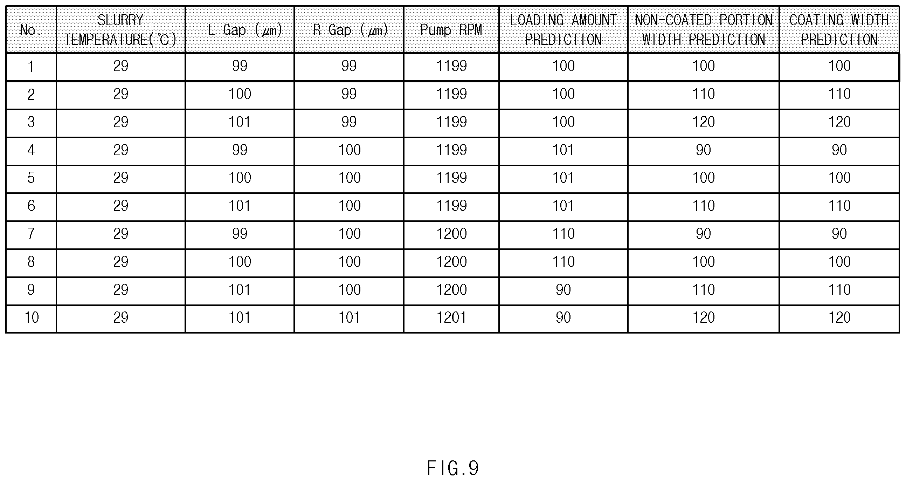

When the processor 120 derives a second candidate control value according to an embodiment disclosed herein, the second quality of the second candidate control value may be predicted using a second prediction model. The processor 120 may derive a second optimal control value on the basis of the predicted second quality. Details of the processor 120 deriving the second optimal control value will be described in detail with reference to FIG. 9.

FIG. 3 is a view for explaining slurry loading characteristics referred to in various embodiments disclosed herein.

Referring to FIG. 3, a base material may include coating portions A₁, A₂, and A₃ and non-coating portions B₁ and B₂. Hereinafter, slurry loading characteristics analyzed by the prediction control device 100 will be described in detail with reference to FIGS. 1 and 2.

The processor 120 may analyze slurry loading characteristics on the basis of data. According to an embodiment, the processor 120 may analyze slurry loading characteristics on the basis of slurry loading amount data of the coating portions A₁, A₂, and A₃. According to an embodiment, the slurry loading amount data may include center loading amount data and left/right coating portion loading amount data. According to the embodiment, the processor 120 may classify all and/or part of a coating portion into a center coating portion and a left/right coating portion according to predetermined criteria. In this case, the center loading amount data may indicate the average of the slurry loading amount data of the center coating portion, and the left/right coating portion loading amount data may indicate the average of the slurry loading amount data of the left/right coating portion. For example, the processor 120 may classify A₂ as a center coating portion, and classify A₂ and A₃ as left/right coating portions. For another example, the processor 120 may classify l₃ and l₄ as center coating portions and classify l₁ and l₆ as left/right coating portions. The processor 120 may determine different criteria for classifying a center coating portion and/or a left/right coating portion according to the type and characteristics of a base material, the purpose of optimizing a prediction control device, the type of equipment implementing the prediction control device, and the like.

According to an embodiment, the processor 120 may analyze slurry loading characteristics on the basis of slurry loading amount data. According to an embodiment, the slurry loading characteristics may include slurry loading amount uniformity. For example, the processor 120 may analyze the slurry loading amount uniformity on the basis of slurry loading amount data of the coating portions A₁, A₂, and A₃. The processor 120 may calculate a loading deviation by using slurry loading amount data in order to analyze slurry loading amount uniformity. According to an embodiment, the processor 120 may calculate a loading deviation by using center loading amount data and left/right coating portion loading amount data.

For example, the processor 120 may calculate a loading deviation according to Equation 1 below. Loading deviation = Center loading amount data - Left/right coating portion loading amount data

According to an embodiment disclosed herein, when the processor 120 classifies A₂ as a center coating portion and A₂ and A₃ as left/right coating portions, the processor 120 may calculate a loading deviation according to Equation 2 below. Loading deviation = (Average loading amount of slurry in A2) - (Average loading amount of slurry in A2 and A3)

According to another embodiment disclosed herein, when the processor 120 classifies l₃ and l₄ as center coating portions and classifies l₂ and l₆ as left/right coating portions, the processor 120 may calculate a loading deviation according to Equation 3 below. Loading deviation = (Average loading amount of slurry in l3 and l4) - (Average loading amount of slurry in l1 and l6)

According to an embodiment, the processor 120 may determine that a slurry loading amount becomes more uniform as a loading deviation is closer to 0.

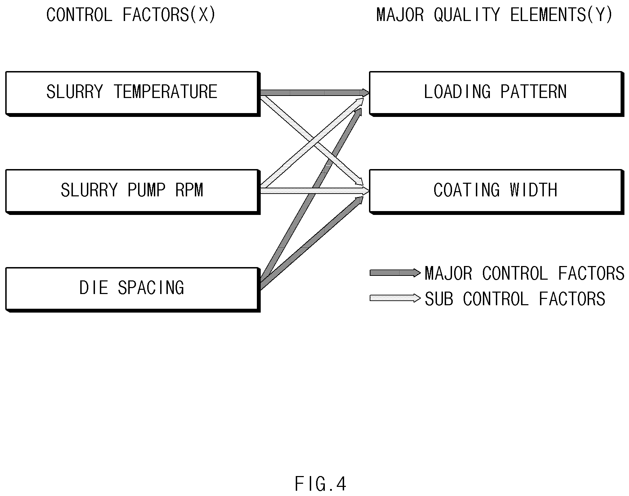

The processor 120 may analyze slurry loading characteristics and set a control target of the prediction control device 100 in response to an analysis result of the slurry loading characteristics. According to an embodiment, the processor 120 may analyze slurry loading amount uniformity and set a control target of the prediction control device 100 to correction on a loading pattern in response to an analysis result. Controlling a control factor by the processor 120 according to the control target will be described in detail in FIG. 4.

FIG. 4 is a view showing control factors and major quality elements referred to in various embodiments disclosed herein.

Referring to FIG. 4, the processor 120 may adjust major quality elements Y by controlling control factors X.

The control factors X may include slurry temperature, slurry pump RPM, or die spacing. According to an embodiment, the slurry pump RPM may affect the slurry spray rate of a coating die. According to an embodiment, the die spacing may include left spacing and/or right spacing of the coating die. In this case, the left spacing may indicate the left interval of an area where a coating die used for battery coating is connected to a motor, and the right spacing may indicate the right interval of the area where the coating die used for battery coating is connected to the motor. The major quality elements Y may include a loading pattern or a coating width. According to an embodiment, the loading pattern may include slurry loading amount uniformity and/or a mismatch.

The processor 120 may control the control factors X to correct the major quality elements Y. According to an embodiment, the control factors X may act as a mutually dependent variable. The processor 120 may determine some of the control factors X as major control factors and the remaining ones as sub control factors according to a control target. For example, if the control target is correction pertaining to a loading pattern, the processor 120 may determine slurry temperature and/or die spacing as a major control factor and slurry pump RPM as a sub control factor. For another example, when the control target is correction on a coating width, the processor 120 may determine die spacing as a major control factor and slurry temperature and/or slurry pump RPM as a sub control factor.

According to an embodiment disclosed herein, when the processor 120 increases slurry temperature to correct slurry loading amount uniformity, slurry may be loaded onto a base material in a concave pattern (U-shaped pattern). According to another embodiment, when the processor 120 decreases slurry temperature to correct slurry loading amount uniformity, slurry may be loaded onto a base material in a convex pattern (A-shaped pattern).

FIG. 5 is a view showing candidate control values derived by a prediction control device according to an embodiment disclosed herein.

Referring to FIG. 5, a processor 120 of the prediction control device 100 may derive a candidate control value including slurry temperature. The processor 120 may derive candidate control values having slurry temperature, die spacing, and slurry pump RPM as control factors. According to an embodiment disclosed herein, die spacing may include left spacing (L Gap) and right spacing (R Gap). The processor 120 may derive a candidate control value by using the adjustable range and the current value of each control factor.

As shown in FIG. 5, the processor 120 may derive a candidate control value by fixing left spacing, right spacing, and slurry pump RPM, and making a slurry temperature have an adjustable range. According to an embodiment, the processor 120 may adjust slurry temperature at predetermined intervals within the adjustable range. According to an embodiment shown in FIG. 5, the processor 120 may set a slurry temperature adjustable range to ±2 [°C], and derive a candidate control value obtained by adjusting the slurry temperature at ±0.4 [°C] intervals on the basis of the current value of the slurry temperature.

However, FIG. 5 shows an example of a candidate control value derived by the processor 120, and the candidate control value derived by the processor 120 is not limited to the values shown in FIG. 5. According to an embodiment, the processor 120 may differently set a slurry temperature adjustable range and/or a slurry temperature adjustable interval.

The processor 120 may predict the quality of a candidate control value by using a prediction model and predict an optimal control value on the basis of the quality.

According to an embodiment, the processor 120 may perform filtering on candidate control values. According to this embodiment, the processor 120 may minimize the number of candidate control values through filtering. In this case, the processor 120 may predict, by using a prediction model, the quality of a candidate control value minimized through filtering, and predict an optimal control value on the basis of the quality.

FIG. 6 is a view for explaining an operation of deriving an optimal control value from candidate control values by a prediction control device according to an embodiment disclosed herein.

Referring to FIG. 6, the processor 120 may predict the quality of a candidate control value by using a prediction model and derive an optimal control value on the basis of the quality.

The processor 120 may predict the quality of a candidate control value by using a prediction model. The quality may include, although not limited to, center loading amount data, left/right coating portion loading amount data, and/or a loading deviation.

According to an embodiment, the processor 120 may calculate, by using a prediction model, predicted values of center loading amount data, left/right coating portion loading amount data, and/or a loading deviation for a candidate control value. According to an embodiment, when the processor 120 adjusts slurry temperature by 0.4 [°C], predicted values of the center loading amount data and/or the left/right coating portion loading amount data may change by maximally 6 [mg].

According to an embodiment, the processor 120 may predict quality on the basis of predicted values of center loading amount data, left/right coating portion loading amount data, and/or a loading deviation, which are calculated using a prediction model.

The processor 120 may derive an optimal control value on the basis of quality. According to an embodiment, the processor 120 may derive, as an optimal control value, a candidate control value in which predicted center loading amount data, predicted left/right coating portion loading amount data, or a predicted loading deviation is closest to a target value. For example, the processor 120 may derive, as an optimal control value, a candidate control value in which a predicted loading deviation is closest to a target value of 0. According to an embodiment shown in FIG. 6, the processor 120 may derive, as an optimal control value, a candidate control value in which a loading deviation prediction value is 0.

According to an embodiment, the processor 120 may adjust slurry temperature by using a derived optimal control value. According to an embodiment shown in FIG. 6, the processor 120 may adjust slurry temperature to 29 [°C] by using an optimal control value in which a loading deviation prediction value is 0.

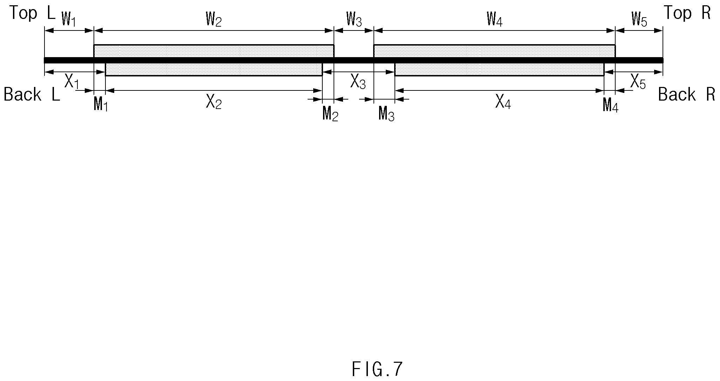

FIG. 7 is a view for explaining a method of determining whether a mismatch has occurred according to an embodiment disclosed herein.

Referring to FIG. 7, a data acquisition unit 110 may acquire second data. The second data may include image data acquired by converting the width of the coating portion of a base material and the width of the non-coating portion of the base material into images. According to an embodiment, the second data may correspond to data related to the base material after the processor 120 adjusts slurry temperature by using an optimal control value.

The processor 120 may determine whether a mismatch has occurred on the basis of second data acquired from a user terminal 300. According to an embodiment, the second data processor 120 may determine whether a mismatch has occurred on the basis of image data acquired by converting the width of the coating portion and the width of the non-coating portion of a base material into images. For example, the processor 120 may recognize that a mismatch has occurred due to a width difference M₁, M₂, M₃, or M₄ between the top of the base material and the back of the base material.

The processor 120 may determine whether a mismatch has occurred by calculating a width difference M₁, M₂, M₃, or M₄ by using the non-coating portion width W₁, W₃, or W₅ and the coating portion width W₂ or W₄ of the top of the base material and the non-coating portion width X₁, X₃, or X₅ and the coating portion width X₂ or X₄ of the back of the base material, and the mismatch may mean that the width and/or loading amount of slurry sprayed onto opposite surfaces of an electrode is not uniform.

For example, the processor 120 may determine whether a mismatch has occurred according to Table 1 below.

**[Table 1]**

| |
|---|
| M₁= W₁-X₁₋ₑ |
| M₂= W₂-X₂+M₁ |
| M₃= W₃-X₃+M₂ |
| M₄= W₄-X₄+M₃ |

In Table 1, e may indicate a value acquired by dividing, by 2, the sum of the total width of the top of a base material (for example: W₁+W₂+W₃+W₄+W₅) and the total width of the back of the base material (for example: X₁+X₂+X₃+X₄+X₅). The processor 120 may determine whether e is reflected according to the type and characteristics of the base material. According to an embodiment, the processor 120 may determine that a mismatch has occurred when the calculated width difference M₁, M₂, M₃, or M₄ values is greater than or equal to a reference value.

FIG. 8 is a view showing a second candidate control value derived by a prediction control device according to an embodiment disclosed herein.

Referring to FIG. 8, a processor 120 of the prediction control device 100 may derive a second candidate control value including slurry pump RPM or die spacing. The processor 120 may derive a second candidate control value having slurry temperature, die spacing, and slurry pump RPM as control factors. According to an embodiment disclosed herein, the die spacing may include left spacing (L Gap) and right spacing (R Gap). The processor 120 may derive a second candidate control value by using the adjustable range and the current value of each control factor.

As shown in FIG. 8, the processor 120 may derive a candidate control value by fixing slurry temperature, and making left spacing, right spacing, and slurry pump RPM have adjustable ranges. According to an embodiment, the processor 120 may adjust left spacing, right spacing, and slurry pump RPM within the adjustable range. According to an embodiment shown in FIG. 8, the processor 120 may adjust left spacing and/or right spacing by ±1 [pm] and/or adjust slurry pump RPM by ±1. In this case, the processor 120 may derive 27 second candidate control values.

However, FIG. 8 corresponds to an embodiment of a second candidate control value derived by the processor 120, and the candidate control value derived by the processor 120 is not limited to the values shown in FIG. 8. According to an embodiment, the processor 120 may differently set a left spacing, right spacing, and/or slurry pump RPM adjustable range or unit.

The processor 120 may predict second quality of a second candidate control value by using a second prediction model and predict a second optimal control value on the basis of the second quality.

According to an embodiment, the processor 120 may perform filtering on second candidate control values. According to the embodiment, the processor 120 may minimize the number of second candidate control values through filtering. In this case, the processor 120 may predict second quality of a second candidate control value minimized through filtering by using a second prediction model, and predict a second optimal control value on the basis of the second quality.

FIG. 9 is a view for explaining an operation of deriving a second optimal control value from second candidate control values by a prediction control device according to an embodiment disclosed herein.

Referring to FIG. 9, the processor 120 may predict the quality of a second candidate control value by using a second prediction model and derive a second optimal control value on the basis of second quality.

The processor 120 may predict second quality of a second candidate control value by using a second prediction model. The second quality may include, but is not limited to, a loading amount, a non-coating portion width, and/or a coating portion width.

According to an embodiment, the processor 120 may calculate predicted values of a loading amount, a non-coating portion width, and/or a coating portion width of a second candidate control value by using a second prediction model. According to an embodiment, the processor 120 may predict second quality on the basis of predicted values of a loading amount, a non-coating portion width, and/or a coating portion width, calculated using a second prediction model.

The processor 120 may derive a second optimal control value on the basis of second quality. According to an embodiment, the processor 120 may derive, as a second optimal control value from second candidate control values, a second candidate control value in which a predicted coating portion width and a predicted non-coating portion width are within normal ranges and a predicted loading amount is closest to a target value. For example, the processor 120 may derive, as a second optimal control value, a second candidate control value in which both a predicted coating portion width and a predicted non-coating portion width are 100 and a predicted loading amount is the target value of 100.

According to an embodiment, the processor 120 may adjust die spacing or slurry pump RPM by using a derived second optimal control value. In this case, slurry temperature may be fixed to slurry temperature adjusted by the processor 120 by using an optimal control value, referring to FIGS. 5 and 6.

According to an embodiment shown in FIG. 9, by using a second optimal control value in which both a predicted coating portion width and a predicted non-coating portion width are 100 and a predicted loading amount is the target value of 100, the processor 120 may adjust left spacing to 99[µm], right spacing to 99[um], and slurry pump RPM to 1199.

According to an embodiment disclosed herein, the processor 120 may predict the quality of a candidate control value by using a prediction model and derive an optimal control value, and may use a second prediction model to predict the second quality of a second candidate control value and to derive a second optimal control value. However, without being limited to the embodiment, the processor 120 may predict integrated quality by using an integrated prediction model acquired by combining a prediction model and a second prediction model, and derive an integrated optimal control value for achieving a final correction target of a prediction control device 100 on the basis of the predicted integrated quality. In this case, the integrated quality may include center loading amount data, left/right coating portion loading amount data and/or loading deviations, loading amounts, a non-coating portion width, and/or a coating portion width.

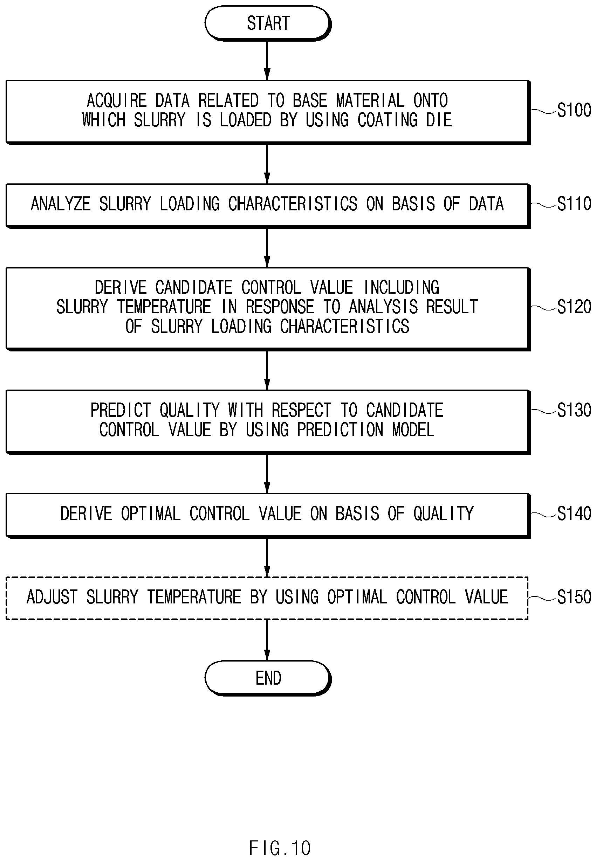

FIG. 10 is a flowchart showing a method of operating a prediction control device according to an embodiment disclosed herein.

Referring to FIG. 10, a method of operating a prediction control device 100 may include: (S100) acquiring data related to a base material onto which slurry is loaded by using a coating die; (S110) analyzing slurry loading characteristics on the basis of the data; (S120) deriving a candidate control value including slurry temperature in response to an analysis result of the slurry loading characteristics; (S130) predicting the quality of a candidate control value by using a prediction model; and (S140) deriving an optimal control value on the basis of the quality. According to an embodiment, the method of operating a prediction control device 100 may further include (S150) adjusting slurry temperature by using an optimal control value.

Hereinafter, S100 to S150 will be described in detail with reference to FIGS. 1 to 6, and descriptions of overlapping contents will be omitted or briefly described.

In S100, the data acquisition unit 110 may acquire data from a user terminal 300. The data acquired by the data acquisition unit 110 may include data related to a base material onto which slurry is loaded by using a coating die. According to an embodiment, the data may include slurry loading amount data regarding the loading amount of slurry applied to a base material. The slurry loading amount data may include center loading amount data and left/right coating portion loading amount data.

In S110, the processor 120 may analyze slurry loading characteristics on the basis of data acquired by the data acquisition unit 110. According to an embodiment, the slurry loading characteristics may analyze slurry loading amount uniformity. For example, the processor 120 may analyze slurry loading amount uniformity on the basis of slurry loading amount data acquired by the data acquisition unit 110. According to an embodiment, the processor 120 may analyze slurry loading amount uniformity by calculating a loading deviation on the basis of slurry loading amount data. For example, the processor 120 may analyze slurry loading amount uniformity on the basis of whether the loading deviation calculated on the basis of the slurry loading amount data is close to 0.

In S120, the processor 120 may derive a candidate control value in response to a result of analyzing slurry loading characteristics. According to an embodiment, the candidate control value may include slurry temperature. For example, the processor 120 may derive a candidate control value including slurry temperature in response to analysis result of the slurry loading characteristics. The processor 120 may set a control target of the prediction control device 100 in response to an analysis result of the slurry loading characteristics. According to an embodiment, the processor 120 may set correction on major quality elements Y as a control target of the prediction control device 100. For example, the processor 120 may analyze slurry loading amount uniformity and set a control target of the predictive control device 100 to correction on a loading pattern in response to an analysis result. In this case, the processor 120 may derive a candidate control value for correcting the loading pattern.

In S130, the processor 120 may predict the quality of a candidate control value. According to an embodiment, the processor 120 may predict the quality of a candidate control value by using a prediction model. According to an embodiment, the prediction model may be modeled by learning a correlation between slurry temperature and slurry loading characteristics. According to an embodiment, the quality may include center loading amount data, left/right coating portion loading amount data, and/or a loading deviation, but is not limited thereto.

In S140, the processor 120 may derive an optimal control value. According to an embodiment, the processor 120 may derive an optimal control value on the basis of the quality predicted in S130. According to an embodiment, the processor 120 may derive, as an optimal control value, a candidate control value in which the predicted central loading amount data, predicted left/right coating portion loading amount data, or loading deviation is closest to a target value. For example, referring to FIG. 6, the processor 120 may derive, as an optimal control value, a candidate control value in which a predicted loading deviation is closest to a target value of 0.

In S150, the processor 120 may adjust slurry temperature. According to an embodiment, the processor 120 may adjust slurry temperature by using an optimal control value derived in S140.

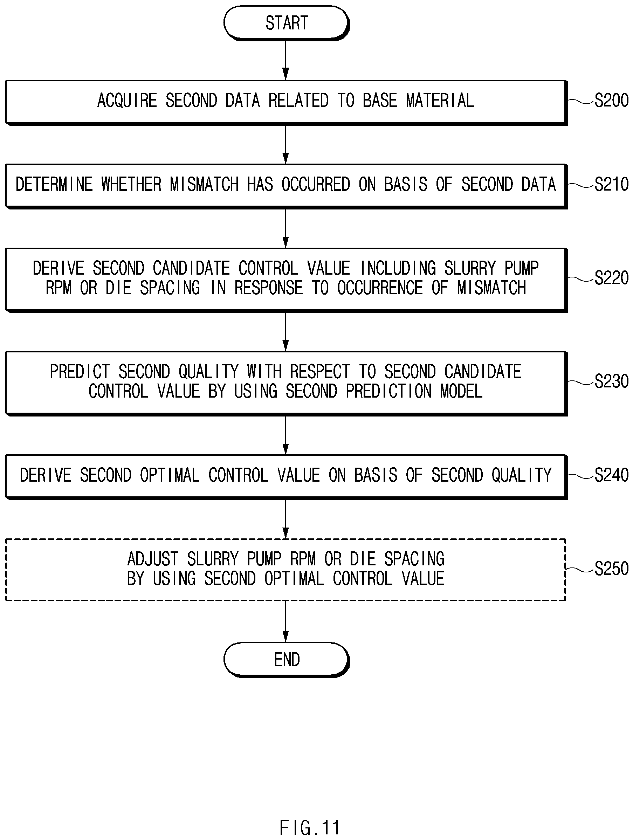

FIG. 11 is a flowchart showing a method of operating a prediction control device according to an embodiment disclosed herein.

Referring to FIG. 11, a method of operating a prediction control device 100 may further include: (S200) acquiring second data related to a base material; (S210) determining whether a mismatch has occurred on the basis of the second data; (S220) deriving a second candidate control value including slurry pump RPM or die spacing in response to the occurrence of a mismatch; (S230) predicting second quality of a second candidate control value by using a second prediction model; and (S240) deriving a second optimal control value on the basis of the second quality. According to an embodiment, the method of operating a prediction control device 100 may further include (S250) adjusting slurry pump RPM or die spacing by using the second optimal control value.

Hereinafter, S200 to S250 will be specifically described with reference to FIGS. 1 to 10, and descriptions of overlapping contents will be omitted or briefly described.

In S200, the data acquisition unit 110 may acquire second data from the user terminal 300. The second data may include data related to a base material to which slurry is applied. According to an embodiment, the data acquisition unit 110 may perform S200 after the processor 120 performs S150 in FIG. 10. The second data may include data related to a base material after adjusting slurry temperature. For example, the second data may include data related to a base material to which slurry is applied after adjusting slurry temperature in S150. According to an embodiment, the second data may include image data obtained by converting the width of the coating portion of the base material and the width of the non-coating portion of the base material into images.

In S210, the processor 120 may determine whether a mismatch has occurred. According to an embodiment, the processor 120 may determine whether a mismatch has occurred on the basis of the second data. According to an embodiment, the processor 120 may calculate whether a mismatch has occurred by using the widths of tops and/or backs of two different opposite surfaces of the base material. For example, the processor 120 may determine whether a mismatch has occurred by calculating a width difference M₁, M₂, M₃, or M₄ by using the non-coating portion width W₁, W₃, or W₅ and the coating portion width W₂ or W₄ of the top of the base material and the non-coating portion width X₁, X₃, or X₅ and the coating portion width X₂ or X₄ of the back of the base material. According to an embodiment disclosed herein, the processor 120 may determine that a mismatch has occurred when the calculated width difference M₁, M₂, M₃, or M₄ values is greater than or equal to a reference value.

In S220, the processor 120 may derive a second candidate control value in response to whether a mismatch occurs. According to an embodiment, the second candidate control value may include slurry pump RPM or die spacing. For example, the processor 120 may derive a second candidate control value including slurry pump RPM or die spacing in response to whether a mismatch occurs.

In S230, the processor 120 may predict the second quality of a second candidate control value. According to an embodiment, the processor 120 may predict the second quality of the second candidate control value by using a second prediction model. According to an embodiment, the second quality may include a loading amount, a non-coating portion width, and/or a coating portion width, but is not limited thereto.

In S240, the processor 120 may derive a second optimal control value. According to an embodiment, the processor 120 may derive a second optimal control value on the basis of the second quality predicted in S230. According to an embodiment, the processor 120 may derive, as a second optimal control value from second candidate control values, a second candidate control value in which a predicted coating portion width and a predicted non-coating portion width are within normal ranges and a predicted loading amount is closest to a target value. For example, referring to FIG. 9, the processor 120 may derive, as a second optimal control value, a second candidate control value in which both a predicted coating portion width and a predicted non-coating portion width are 100 and a predicted loading amount is the target value of 100.

In S250, the processor 120 may adjust slurry pump RPM or die spacing. According to an embodiment, the processor 120 may adjust slurry pump RPM or die spacing by using the second optimal control value derived in S240.

According to an embodiment disclosed herein, when the processor 120 uses an integrated prediction model acquired by combining a prediction model and a second prediction model, the processor 120 may simultaneously perform S100 to S150 and S200 to S250.

Terms such as "include", "comprise", or "have" described above mean that the corresponding component may be inherent unless otherwise stated, and thus it should be construed as possibly including more other components rather than excluding other components. All terms, including technical or scientific terms, have the same meaning as commonly understood by a person of ordinary skill in the art to which the embodiments disclosed herein belong, unless defined otherwise. Commonly used terms, such as terms defined in a dictionary, should be interpreted as consistent with the contextual meaning of the related art, and unless explicitly defined herein, they are not interpreted in an ideal or excessively formal meaning.

The above description is merely an example of the technical idea disclosed herein, and various modifications and variations may be made by those skilled in the art to which the embodiments disclosed herein belong without departing from the essential characteristics of the embodiments disclosed herein. Therefore, the embodiments disclosed herein are not intended to limit the technical spirit of the embodiments disclosed herein, but to explain, and the scope of the technical spirit disclosed herein is not limited by these embodiments. The protection scope of the technical ideas disclosed herein should be interpreted according to the claims below, and all technical ideas within the equivalent scope should be construed as being included in the scope of rights of this document.

## Claims

1. A prediction control device comprising:
a data acquisition unit for acquiring data related to a base material onto which slurry is loaded by using a coating die; and
a processor for analyzing slurry loading characteristics on the basis of the data, deriving a candidate control value including slurry temperature in response to an analysis result of the slurry loading characteristics, predicting the quality of the candidate control value by using a prediction model, and deriving an optimal control value on the basis of the quality.

2. The prediction control device of claim 1, wherein the prediction model is modeled by learning a correlation between the slurry temperature and the slurry loading characteristics.

3. The prediction control device of claim 1, wherein the data includes slurry loading amount data of the base material, and the processor analyzes the uniformity of a slurry loading amount on the basis of the slurry loading amount data.

4. The prediction control device of claim 3, wherein the slurry loading amount data includes center loading amount data and left/right coating portion loading amount data.

5. The prediction control device of claim 1, wherein the processor adjusts the slurry temperature by using the optimal control value.

6. The prediction control device of claim 5, wherein:
the data acquisition unit acquires second data related to the base material after the processor adjusts the slurry temperature; and
the processor determines, on the basis of the second data, whether a mismatch has occurred, derives a second candidate control value including a slurry pump RPM or die spacing in response to the occurrence of the mismatch, predicts second quality of the second candidate control value by using a second prediction model, and derives a second optimal control value on the basis of the second quality.

7. The prediction control device of claim 6, wherein:
the second data includes image data acquired by converting the width of a coating portion of the base material and the width of a non-coating portion of the base material into images; and
the processor determines, on the basis of the image data, whether the mismatch has occurred.

8. The prediction control device of claim 6, wherein the processor adjusts the slurry pump RPM or the die spacing by using the second optimal control value.

9. A method of operating a prediction control device, the method comprising:
acquiring data related to a base material onto which slurry is loaded by using a coating die;
analyzing slurry loading characteristics on the basis of the data;
deriving a candidate control value including a slurry temperature in response to an analysis result of the slurry loading characteristics; and
predicting the quality of the candidate control value by using a prediction model, and deriving an optimal control value on the basis of the quality.

10. The method of claim 9, wherein the prediction model is modeled by learning a correlation between the slurry temperature and the slurry loading characteristics.

11. The method of claim 9, wherein:
the data includes slurry loading amount data of the base material; and
the method further comprises analyzing the uniformity of a slurry loading amount on the basis of the slurry loading amount data.

12. The method of claim 11, wherein the slurry loading amount data includes center loading amount data and left/right coating portion loading amount data.

13. The method of claim 9, further comprising adjusting the slurry temperature by using the optimal control value.

14. The method of claim 13, further comprising:
acquiring second data related to the base material after adjusting the slurry temperature;
determining, on the basis of the second data, whether a mismatch has occurred;
deriving a second candidate control value including a slurry pump RPM or die spacing in response to the occurrence of the mismatch;
predicting second quality of the second candidate control value by using a second prediction model; and
deriving a second optimal control value on the basis of the second quality.

15. The method of claim 14, wherein:
the second data includes image data acquired by converting the width of a coating portion of the base material and the width of a non-coating portion of the base material into images; and
the method further comprises determining, on the basis of the image data, whether the mismatch has occurred.

16. The method of claim 14, further comprising adjusting the slurry pump RPM or the die spacing by using the second optimal control value.
